# EUROPEAN PATENT SPECIFICATION

(11) **EP 4 168 358 B1**
(45) Date of publication and mention of the grant of the patent: **31.07.2024**
(21) Application number: 20733965.6
(22) Date of filing: 18.06.2020
(51) Int. Cl.: C01B 17/765, C01B 17/80

(54) **PROCESS AND PLANT FOR THE PRODUCTION OF SULFURIC ACID**
VERFAHREN UND ANLAGE ZUR HERSTELLUNG VON SCHWEFELSÄURE
PROCÉDÉ ET INSTALLATION DE PRODUCTION D'ACIDE SULFURIQUE

(43) Date of publication of application: 26.04.2023
(73) Proprietor: Metso Metals Oy, 02230 Espoo (FI)
(72) Inventor: DAUM, Karl-Heinz, 65549 Limburg (DE); MOHSLER, Stefan, 64285 Darmstadt (DE); BRÄUNER, Stefan, Scarborough, Western Australia 6019 (AU)
(74) Representative: Keil & Schaafhausen Patentanwälte PartGmbB
(86) International application number: PCT/EP2020/066982
(87) International publication number: WO 2021/254627

(56) References cited:
- WO-A2-2005/095272
- WO-A2-2009/065485
- WO-A2-2011/139390
- US-A- 4 591 494
- US-A1- 2017 349 437

## Description

The invention deals with a process and its relating plant for producing sulfuric acid by catalytic oxidation of SO₂ to SO₃ and subsequent absorption of the SO₃ in concentrated sulfuric acid in an intermediate and a final absorber stage, wherein the intermediate absorber stage features a pre-absorber and a post-absorber, which are arranged such that the not-absorbed SO₃ leaving the pre-absorber is supplied to a post-absorber and such that the sulfuric acid leaving the post-absorber is split into two streams of which the first stream is recirculated back in the pre-absorber and the second stream is at least partly passed into the post-absorber.

Typically, sulfur dioxide (SO₂) is formed in a combustion of elemental sulfur. Alternatively, sulfur dioxide can be obtained from off gases out of metallurgical processes, e.g. from the pyrometallurgical production of non-ferrous metals, from the roasting of sulfide ores, from the thermal decomposition of metal sulfates or alkali sulfates or from the processing of contaminated waste sulfuric acid by thermal decomposition. First, impurities are removed from this off gas, which impair or could impair the quality of the sulfuric acid or the catalytic conversion to sulfur trioxide. In a downward second cleaning step, the purified exhaust gas is dried in a drying tower with concentrated sulfuric acid of e.g. 94 - 96 wt.-% H₂SO₄, i.e. quantitatively freed from water moisture, whereby this sulfuric acid is diluted accordingly by the water absorption.

Independent from the source of the sulfur dioxide, sulfuric acid is usually produced using the so-called double absorption process. Thereby, the SO₂ is converted into sulfur trioxide (SO₃) in a multistage converter with the aid of a solid catalyst, e.g. with vanadium pentoxide as an active component. The obtained SO₃ is drawn off after the first contact stages of the converter and fed to an intermediate absorber.

SO₃ being drawn off after the last contact stage of the converter is fed to a final absorber. In each absorber, the SO₃ containing gas is traditionally fed counter currently to concentrated sulfuric acid and absorbed in at least one of these two absorbers.

In both absorbers, the absorption takes place in concentrated sulfuric acid with a feed concentration of e.g. 98.5 wt.-% H₂SO₄, whereby its concentration increases. The water required to form sulfuric acid from SO₃ and H₂O and to dilute it to approx. 98.5 wt.-% H₂SO₄ comes partly from the gas/air humidity absorbed in the drying tower. The remaining water is supplied as process water to the intermediate absorber and/or the final absorber. The concentration of sulfuric acid is kept constant by suitable control.

In this context, WO 2005/095272 A describes a process and a plant for producing sulfuric acid by catalytic oxidation of SO₂ to SO₃ and subsequent absorption of SO₃ in sulfuric acid. The absorption is divided into two sequentially connected absorption stages, whereby a colling is foreseen between the two stages. As a special feature, a partial stream of SO₃ is branched off before the first absorption stage and supplied directly to the second absorption stage.

Document WO 2009/065485 builds on WO 2005/095272 A. Again, two absorption stages are used to produce sulfuric acid, whereby it is the distinguishing feature that the acid concentration entering the first absorption stage is lowered to a value between 97,3 and 98,4 wt.-% to reduce the absorption in the first stage and, therefore, reduce the necessary dimensions as the amount of recirculated acid for the absorption is reduced.

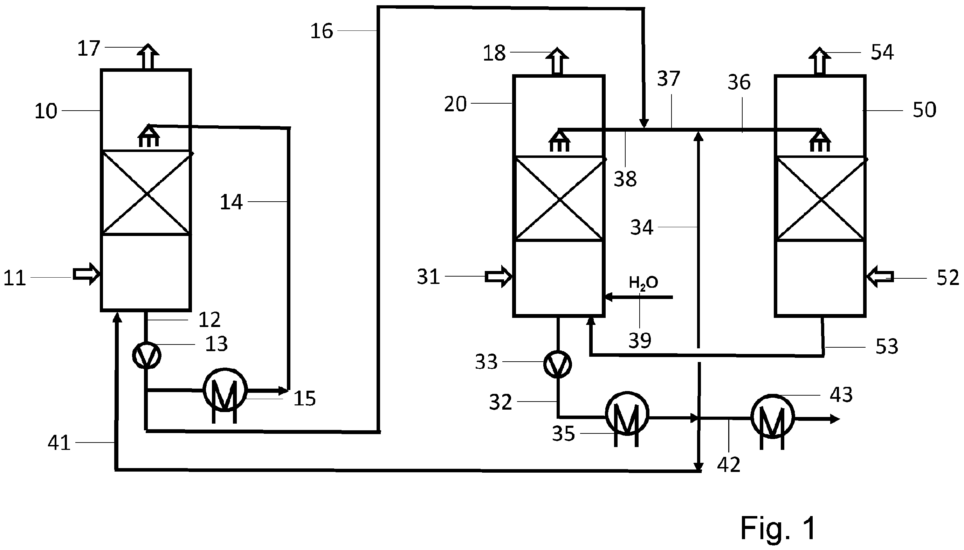

From WO 2009/065485 it is known to use acid withdrawn from the drying tower in the intermediate absorber. Figure 1 illustrates this well-known process.

Air or SO₂-containing gas containing water moisture is fed via line 11 into a drying tower 10. Dried gas is withdrawn by line 17, while acid is withdrawn via line 12 and pump 13. Parts of the acid are recirculated via line 14 and its related heat-exchanger 15. The recirculated acid is used as drying medium in said drying tower 10.

The other part of the acid is added via line 16 into line 37, combining in line 38. Line 38 is the supply line for the absorbent. This absorbent is used in the intermediate absorber 20 to absorb sulfur trioxide, whereby sulfur trioxide is fed into the intermediate absorber 20 via line 31. To adjust the appropriate concentration, process water is also fed into the intermediate absorber 20 via line 39. The use of sulfuric acid coming from the drying tower via line 16 as an absorbent in the intermediate absorber is a so-called crossflow. Concentration of this acid is typically 94 - 96 wt.-%. After mixing of this acid with the recirculation flow line 37, this results in a concentration at line 38 between 97.8 and 98.2% H₂SO₄.

The SO₃ enriched acid is discharged via line 32 and transferred to the heat exchanger 35 via pump 33. From there, the acid is fed in a first partial flow into line 34. The flow in line 34 is divided again and one of the resulting partial flows is fed into line 37. This flows into the already discussed line 16. The total flow formed from these two partial flows forms the absorbent, which is introduced into the intermediate absorber 20 via line 38.

The second partial flow from line 32 is returned to drying tower 10 via line 41. The third part is discharged via line 42 and a further heat exchanger 43.

The second partial flow of line 35 is introduced via line 36 as an absorbent into the final absorber 50, which is fed with SO₃ containing gas via line 52. Sulfuric acid from this absorber 50 is recirculated back into the intermediate absorber 20 via line 53.

Due to the high solubility of sulfur dioxide in the circulating sulfuric acid of the drying tower, this circuit is particularly suitable for off gases from pyrometallurgical processes containing sulfur dioxide. The concentration of the SO₂ dissolved in the above-mentioned crossflow line 16 is lowered in the acid circulation of the intermediate absorber 20. The partially stripping within this intermediate absorber 20 is favoured by the increased temperature of the acid. The resulting stripped gaseous SO₂ is leaving the intermediate absorber 20 via line 18 and fed with the residual gas to the not-shown subsequent catalytic stage and converted into SO₃, where it is finally recovered as sulfuric acid in the final absorber 50. As a consequence, the crossflow acid from the drying tower 10 does not enter the acid circulation of the final absorber 50 and thus cannot be stripped there from the dissolved SO₂ either, which would ultimately lead to the SO₂ leaving the plant in the chimney gas via line 54 and thus to inadmissible emissions.

A disadvantage of this arrangement, however, is that the acid concentration on top of the intermediate absorber is below the optimum of 98.5 wt.-% H₂SO₄. This optimal value results from the fact that the minimum acid vapour pressure (azeotrope) is at ~98.5 wt.-% H₂SO₄, which, therefore, enables a quantitative absorption of the sulfur trioxide at said concentration. The increase in concentration due to the absorption of SO₃ within the packing in the absorber is limited to a typical acid outlet concentration of 99.3 to 99.4 wt.-% H₂SO₄. The acid outlet concentration must not significantly exceed 99.3-99.4 wt.-% H₂SO₄, since the SO₃ partial pressure increases noticeably and would impede complete absorption.

However, the discussed lower acid concentration during the entry into the intermediate absorber caused by the addition of the crossflow acid from the drying tower according to the above-mentioned process known from WO 2009/065485 is no longer correlated to the explained azeotropic concentration. Consequently, the process is also no longer has the lowest total vapour pressure and at acid concentrations below 98.5 wt.-% H₂SO₄, both the H₂SO₄ vapour pressure and the SO₃ partial pressure decrease, while the H₂O partial pressure increases. As a result, the lower acid concentration does not lead to a reduction in SO₃ absorption, but leads to increased mist formation, which in turn requires the installation of highly efficient mist filters (candle filters) in the head of the intermediate absorber.

Moreover, excessive acid mist would also form within the hot SO₃ -containing gas entering the tower. This formed mist has the disadvantage that it could not be separated in the subsequent packing and would require additional extensive measures to remove it in order to protect the downstream apparatus from corrosion.

The concentration difference of typical (outlet - inlet) 99.3 - 98.5 = 0.8 wt.-% H₂SO₄ together with the amount of sulfur trioxide to be absorbed determines the required acid circulation quantity at the intermediate absorber. With increasing SO₂ content of the input gas and thus a higher SO₃ content of the gas entering the intermediate absorber, the acid circulation quantity must be increased practically proportionally. As a result, the flooding limit of conventional ceramic packing would be exceeded. In such cases, it is therefore necessary to increase the diameter of the tower considerably for hydraulic reasons, even if the mass transfer does not require this.

A splitting of the intermediate absorption stage in at least two devices is also known from US 7,837,970 B2. This ensures the possibility of cheap device, like a venturi as a first pre-absorber and smaller packed bed absorber as a post absorber. As a result, investment costs can slightly be reduced. However, it does not have any impact on mist formation.

Therefore, it is the subject of the current invention, to provide a process and a correlating plant with improved stripping of dissolved SO₂ and, therefore preventing stripped SO₂ vanishing the plant towards the stack, and also a reduction of acid mist formation without a hydraulic over-dimensioning of the intermediate absorber.

This aim is achieved with a process according with the features of claim 1.

Such a process for producing sulfuric acid by catalytic oxidation of SO₂ to SO₃ and subsequent absorption of the SO₃ in concentrated sulfuric acid requires intermediate and a final absorber, wherein the absorption takes place. In both absorbers, the absorption takes place in concentrated sulfuric acid with a feed concentration of e.g. 98.5 wt.-% H₂SO₄, whereby its concentration increases.

The intermediate absorber features a pre-absorber and a post-absorber. Both absorbers, which build together the intermediate absorber, are arranged such that the not-absorbed SO₃ leaving the pre-absorber is supplied to the post-absorber. The sulfuric acid withdrawn from the post-absorber is split into two streams of which the first stream is recirculated back in the pre-absorber and the second stream is at least partly passed into the post-absorber.

It is the basic idea underlying the invention that the first stream is uncooled directly injected into the pre-absorber with a temperature between 80 and 200 °C. Preferably, the temperature of the sulfuric acid being injected into the pre-absorber is between 100 and 150 °C. Uncooled in the sense of the invention means that it does not pass any heat exchanger, so heat losses via line losses are the only heat losses. It is possible to admix the first stream with sulfuric acid from another source, like the drying tower.

The second stream passes a cooling and is at least partly fed into the post-absorber with a temperature between 60 and 90 °C. Further streams for the post-absorber or a complete withdrawing can be branched off.

This design has the technical effect that mist formation in the pre-absorber can be reduced significantly or completely suppressed. This due to the low temperature difference between the entering gas and acid fed to the pre-absorber.

Moreover, the heat exchanger is smaller which leads to lower investment costs.

In a preferred embodiment, the pre-absorber is designed as an empty tube or venturi, which leads to very low investment costs due to the simple design. Also, controlling and maintenance can be done economically and easily.

Additionally or alternatively, the post-absorber is designed as a packed-bed absorber. This ensures a maximum efficiency of the absorption. Due to the additional pre-absorber, the packed bed can be smaller without a risk of hydraulic flooding, which further lowers investment costs.

Moreover, the first stream features a flow rate between 20 and 80 %, preferably between 25 and 40 % of the sulfuric acid withdrawn from the post-absorber. This leads to the most efficient heat distribution. Particular the preferred range leads to significantly reduced dimensions of and, therefore, costs for the post-absorber

While the pre-absorber is operated with a feed acid concentration below 98.5% H₂SO₄ (because of the addition of "weaker" acid from drying tower crossflow), the post-absorber is operated with conventional 98.5% acid at the inlet and thus operates under ideal absorption conditions.

It is also preferred that the first acid stream entering the pre-absorber features a temperature difference to the entering SO₃ containing gas of less than 50 °C, preferably less than 30 °C. Thus, the temperature of both streams are nearly equal which increases absorption rates. In detail, the elevated temperature of this acid thus favors the stripping of the SO₂. As a result, the inventive process significantly reduces mist formation, which means less efficient mist filters are required and thus lower gas pressure loss therein due to the lower temperature difference between the incoming gas and the feed liquid / acid at the pre-absorber.

As a further advantage of the invention, the SO₂ containing feed gas to the plant has a concentration of more than 9.0 vol.-% prior to the conversion, preferably more than 11.5 vol.-%. These are relatively high concentrations, which are difficult to handle in formally known processes due to the flooding limit of conventional ceramic packing.

It has to be understood that the higher the concentration of the SO₂ content in the input gas, the more advantageous the process according to the invention. According to the invention, the input gas into the converter for the conversion of the sulfur dioxide has 6.5 to 30 vol.% SO₂, preferably > 11 vol.% SO₂. The process is therefore particularly suitable for use in conjunction with a process for the catalytic conversion of gases with a high SO₂ content, as described in DE 102 49 782 A1.

Furthermore, air or SO₂ containing gas is dried in at least one drying tower by means of sulfuric acid for removing water moisture.

It is preferred to admix the sulfuric acid supplied into the pre-absorber with sulfuric acid from another source. In this context, it is particularly preferred that the sulfuric acid from the other source is sulfuric acid from the drying tower. Consequently, a closed loop of sulfuric acid as absorbent is possible. Preferably, the temperature of the acid from the other source, particularly the drying tower is between 80 and 180 °C, preferably above 90 °C.

It is also preferred that the second stream is mixed with sulfuric acid from another source upstream to the cooling. This reduces the number of acid circuits.

It has further been recognized that the second stream can be further split in at least two streams downstream of the cooling. So, this third stream can be fed in the final absorber after the cooling. As a result, an additional cooling device for the final absorber is omitted.

In addition, it is necessary to add process water to the sulfuric acid for adjusting the acid concentration. In the invention, it is preferred to feed this into the lower vestibule of the pre-absorber and/or the lower vestibule of the post-absorber and/or the lower vestibule of the final absorber. So, no separate devices are necessary.

However, it is also preferred that process water is added to the sulfuric acid second stream as discharged from the acid cooler, at a separate device. As a result, concentration of sulfuric acid is higher when passing the cooler, which avoids or substantially reduces corrosion. It is also possible that process water is added to the sulfuric acid first stream entering the pre-absorber, at a separate device.

The invention further belongs to a plant according to claim 12, particular a plant for performing a process according to claims 1 to 11.

Such a plant for the production of sulfuric acid for producing sulfuric acid by catalytic oxidation of SO₂ to SO₃ and subsequent absorption of the SO₃ in concentrated sulfuric acid in an intermediate and a final absorber. The intermediate absorber features a pre-absorber and a post-absorber which are arranged such that the not-absorbed SO₃ leaving the pre-absorber is supplied to a post-absorber. A discharge conduit for sulfuric acid from the post-absorber is split into a recirculation conduit feeding sulfuric acid back into the pre-absorber and a supply conduit feeding sulfuric acid into the post-absorber.

It is essential for the invention that a cooler is only foreseen in the supply conduit to the post-absorber. The plant does not feature a cooling of the acid directed to the pre-absorber, particular no heat exchanger is placed in the acid feeding line of the pre-absorber.

This design has the benefit that only part of the conventionally required amount of cooled circulating acid is transferred to the said post-absorber, hydraulic flooding is prevented. Simultaneously, size and cost of this post absorption tower are reduced. This is due to the fact that the total amount of acid is determined by increasing the concentration of circulating acid by typically 99.3 to 98.5 wt,-% H₂SO₄ based on the total SO₃ supplied to the intermediate absorber, while the amount of acid supplied to the packed bed post-absorber is approximately 20-90 wt.-%, preferably 50-70 wt.-% of the conventionally calculated total amount of acid.

The inventive design splits the intermediate absorption tower into two separate vessels. Preferably, the pre-absorber is an empty tube or venturi type and/or the post-absorber is designed as a packed bed counter-current tower. While the post-absorber is fed with cooled acid, the pre-absorber is fed with non-cooled acid. So, only one cooler is foreseen, whereby the term "cooler" also include the possibility of at least two cooling devices.

In a preferred embodiment, an air-cooled heat exchanger is used as the cooling device for the post-absorber, which is of particular importance. The increasing scarcity of suitable cooling water is widespread and increasingly noticeable, especially in areas with limited / non-existent availability of cooling water, as well as e.g. with regulated limited withdrawal possibilities from rivers or oceans. For this reason, fin-fan air coolers have already been used in the past to dissipate excess energy from acid cooling. The available materials for this air coolers were e.g. 316L/304 with acid temperatures up to 80 °C or anodic protected air coolers from 304 up to 110 °C, whereby the latter have very limited proven record in practice.

The use of air-cooled heat exchangers for cooling the circulating acid is advantageous for the invention-based process with acid temperatures of > 80 °C, better >100 °C, much better >120 °C, and the use of suitable material, such as Si-alloyed stainless-steel material e.g. SX^{™}, both in terms of investment and operating costs, as well as space required. The higher temperature level and the lower volume of circulating acid result in a considerably smaller cooler (dimensions, weights, cost) and lower power consumption for the cooling air fans. In addition, in the case of air coolers, the risk potential due to leakage of acid in cooling water (and vice versa) is eliminated, so that, for example, the possibility of the formation of hydrogen as a reaction product of corrosion (and the associated risk of explosion) can be largely prevented.

Moreover, it is preferred that the pre-absorber is made of carbon steel with internal lining and the post-absorber is made of stainless steel or carbon steel with an internal brick lining. Conventional absorbers are usually made of carbon steel with an internal acid-resistant brick lining. Although the materials used are relatively inexpensive, the installation is costly due to the manual work involved in the lining. Alternatively, absorption towers are built from stainless steel, resulting in reduced costs mostly caused by faster installation.

However, these stainless steels are susceptible to corrosion if the operating conditions deviate from the specifications. Preferably such towers are made of Si-alloyed stainless-steel material, e.g. SX^{™}, or austenitic alloys, e.g. 310S, whereas Si-alloyed stainless steel offers lower resistant to oleum (with free SO₃ = > 100 wt.-% H₂SO₄). Due to the high SO₃ concentration of the inlet gas, oleum can form locally and lead to significant corrosion. Therefore, the acceptance of this design in industry is somewhat sceptical. The inventive process eases this situation in the post-absorber, wherein the incoming SO₃ is already partly absorbed in the pre-absorber and consequently the gas at the inlet to the post-absorber has a much lower SO₃ concentration compared to the conventional process and hence a lower risk of oleum formation. According to the inventive process, the pre-absorber is made of carbon steel with internal lining, and the post-absorber offers the opportunity of comfortable design as "brick-lined as well as stainless", which can, therefore, be used for cost optimization. This leads to reduced investment costs.

In addition, a drying tower for drying a gas containing air or SO₂ containing gas with sulfuric acid is foreseen. The drying tower features preferably a pre-drying tower and a post-drying tower, which are arranged such that moisture containing air or SO₂ containing gas is supplied to a pre-drying tower, wherein a discharge conduit for acid from the post-drying tower is split into a recirculation conduit feeding sulfuric acid back into the pre-drying tower and a supply conduit feeding sulfuric acid into the post-drying tower. This enables an improved drying similar as the splitting of the intermediate absorber into two devices.

Further developments, advantages and possible applications can also be taken from the following description of exemplary embodiments and the drawings. All features described and/or illustrated from the subject matter of the invention per se or in any combination, independent of their inclusion in the claims or their back reference.

In the drawings:
- Fig. 1: shows schematically a process known from the state of the art
- Fig. 2: shows schematically a first process according to the invention whereby the post-absorber and the final absorber feature a common acid supply conduit,
- Fig. 3: shows schematically a second process according to the invention whereby the post-absorber and the final absorber feature separate acid circuit,
- Fig. 4: shows schematically a third process according to the invention whereby drying tower is separated in a pre-dryer and a post-dryer,
- Fig. 5: shows schematically a fourth process according to the invention whereby the dryer, the post-absorber and the final absorber feature a common acid supply conduit,
- Fig. 6: shows schematically a fifth process according to the invention whereby only one source for process water is used in a common acid circuit and
- Fig. 7: shows schematically a sixth process according to the invention whereby only one source for process water is used in the pre-absorber.

Figure 1 has already been discussed in the introduction discussing the state of the art in detail.

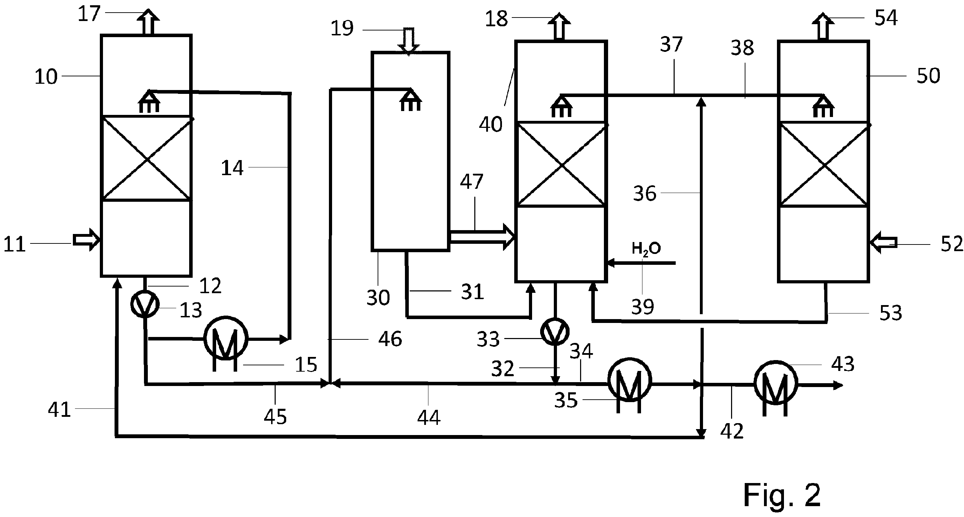

Figure 2 shows an installation according to the invention method for processing. A sulfur dioxide containing gas, e.g. a pyrometallurgical off gas containing SO₂, is introduced via conduit 19 into pre-absorber 30, which represents together with post-absorber 40 the intermediate absorber. Preferably, the pre-absorber is designed as an empty tower or as a venturi. Sulfuric acid is added via conduit 46 is absorption agent.

Liquid and gaseous parts are withdrawn via conduit 31 and 47 and introduced in the post-absorber 40, which is preferably designed as a packed-bed absorber. Therein, remaining SO₃ is absorbed, preferably counter-current, with liquid acid fed in via conduit 37 and withdrawn via conduit 32 and pump 33. Parts of the withdrawn acid stream are recycled via conduit 44 to mix it with fresh sulfuric acid from conduit 45 and recirculated via conduit 46 into the pre-absorber 30.

Water is added into the sump of the post-absorber 40 via conduit 39. Alternatively, the process water can be added to the sump of the pre-absorber 30 or to a not-shown pump tank.

The other part of the sulfuric acid stream is passed from conduit 32 in conduit 34 and cooler 35. Parts of the cooled acid are fed via conduit 36 and 37 back into the post-absorber 40. So, the absorption agent of the post-absorber 40 is cooled.

Talking about the sulfuric acid stream of conduit 36, it is further possible to send a part of this stream via conduit 38 into a final absorber 50, which is also preferably designed as a packed bed. Therein, sulphur trioxide containing gas is fed in via conduit 52. Gas is blown out via conduit 54 while acid from the sump of the final absorber 50 is recirculated back via line 53 into the sump of post-absorber 40.

Another part of the stream from conduit 34 is withdrawn via conduit 42 and optionally an additional cooler 43. The last part is recycled via conduit 41 into a drying tower 10.

Sulfuric acid is fed via line 14 into this drying tower 10. Dried acid is withdrawn via line 12 and pump 13. Parts of the acid are recirculated via line 14 and its related heat-exchanger 15. The recirculated acid is used as drying medium in said drying tower 10. Parts of the sulfuric acid are withdrawn from conduit 12 and fed into the pre-absorber 30 via conduits 45 and 46.

This embodiment of the invention shows a common acid circulation with the post-absorber 40 and the final absorber 50. It features the common acid cooler 35. The distribution of the circulating acid required for the intermediate absorption typically amounts to typically 65% cooled for the post-absorber 40 via lines 36 and 37 and the residual 35% uncooled via line 44 to the pre-absorber 30 but can vary depending on the SO₂ content of the gases to be processed.

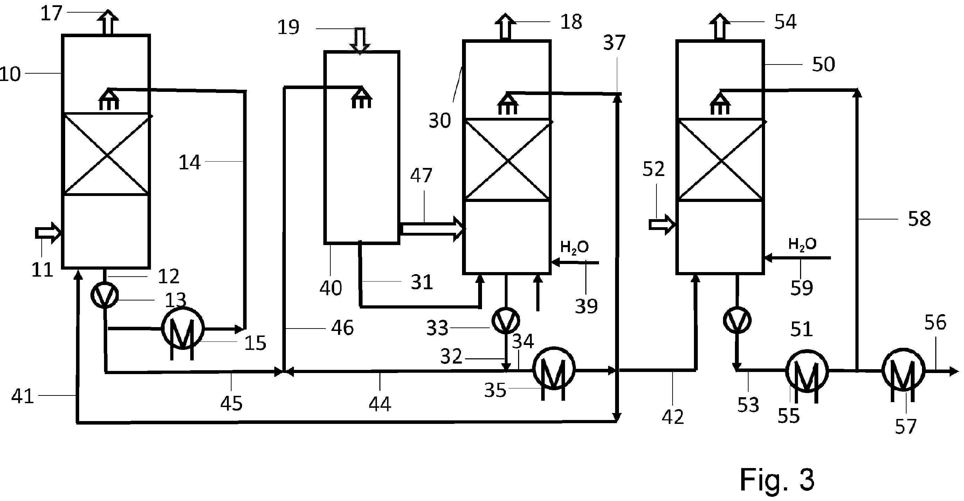

Figure 3 shows another embodiment which differs from figure 2 in the acid circuits. The cooled sulfuric acid from conduit 34 and cooler 35 is split into a stream recirculated via conduit 41 in the drying tower 10 and a cooled stream fed into the post-absorber 30 via conduit 37. The remaining part is passed into the sump of the final absorber 50 via conduit 42.

SO₃ containing gas is injected into this final absorber via conduit 52. An independent acid circuit feeds acid into the final absorber 50 via conduit 58. The acid is withdrawn via conduit 53, pump 51 and a separate cooler 55. Parts of the acid are withdrawn via conduit 56 and cooler 57 while the other part is recirculated via conduit 58. Water is added separately via conduit 59.

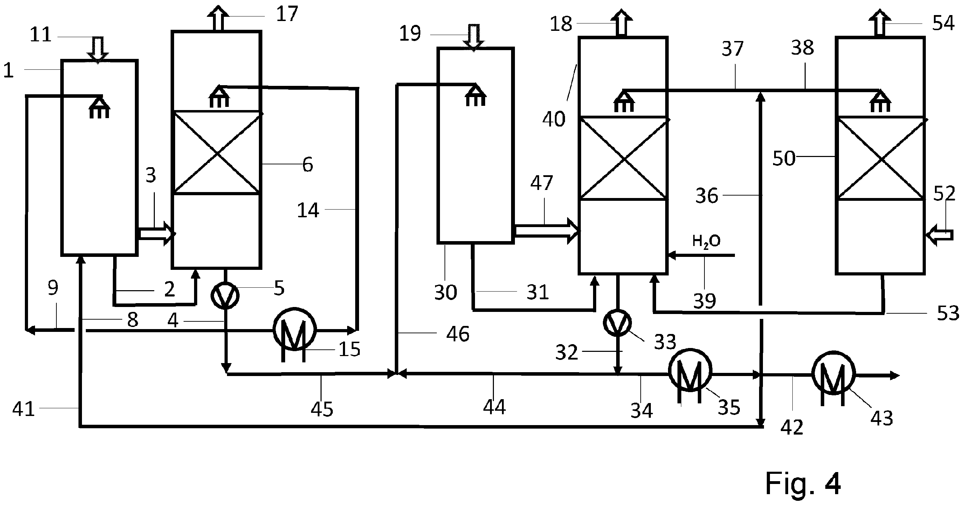

Figure 4 shows an embodiment with an arrangement of the absorbers as it is known from figure 2. The difference is the arrangement of the drying towers, where the drying tower 10 is split into a pre-drying tower 1 and a post-drying tower 6. Gas is inserted via conduit 11 into the pre-drying tower 1 and dried with acid from conduit 9. Acid from the common acid circuit of post-absorber and final absorber is recycled in the sump of pre-drying tower 1 via conduit 41. Naturally, all other shown possibilities of separated acid circuits and water adding are also possible.

Acid and gas are withdrawn from the sump of pre-drying tower 1 via conduits 2 and 3 and fed into post-drying tower 6, preferably counter-current. Acid from its sump is withdrawn via conduit 4 and pump 5. A first stream from conduit 4 is recirculated via conduit 9 into the pre-drying tower 1.

Another stream from conduit 4 is recirculated in the post-drying tower 6 via line 14 and cooler 15 while the last part is transported to the pre-absorber via conduits 45 and 46. A third stream is passed via line 9 back into the pre-drying tower 1.

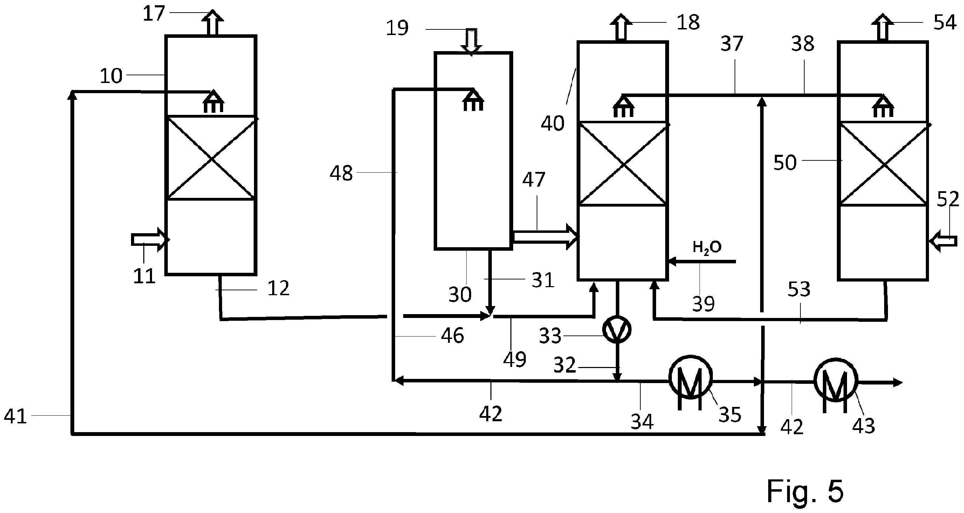

Figure 5 shows another alternative of the current invention, using only one drying tower 10. In contrast to figure 2, figure 5 shows a common acid circuit of the absorbers 30, 40 and 50 as well as the drying tower 10. This leads to a further reduction of the coolers since only the two coolers 35 and 43 remain in the process.

In detail, the drying tower 10 does no longer feature a separate acid circuit, but its absorbent if fed in via conduit 41, which is branched off conduit 34 after passing cooler 35. So, it is derived from acid from the sump of post-absorber 40.

All acid from the sump of the drying tower 10 is withdrawn via conduit 12 and 49 and mixed with acid from the sump of the pre-absorber 30.

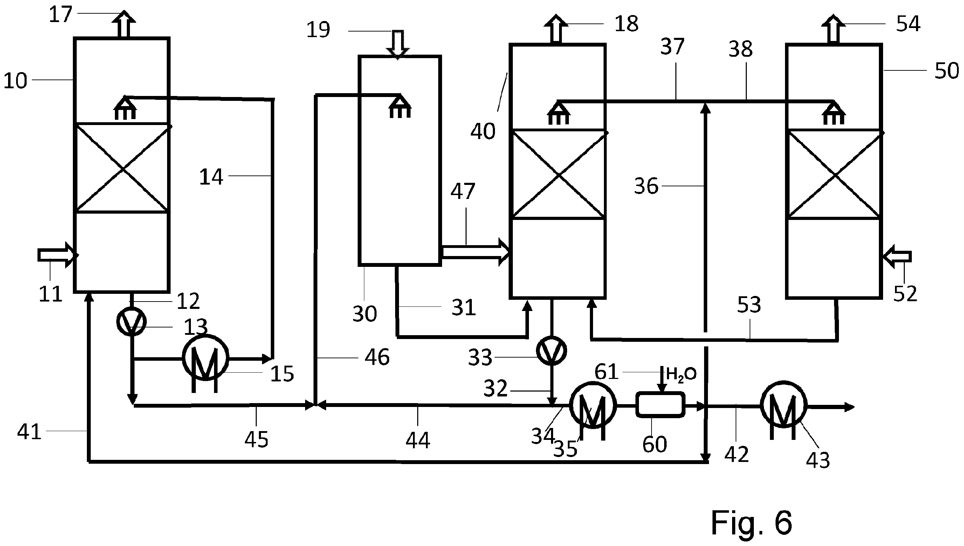

Figure 6 shows another embodiment of the invention directed to an additional admixing of process water. Therein, the common acid circuit of post-absorber 40 and final absorber 50 features an additional water diluter 60. Therein, water is admixed via conduit 61 to the stream in conduit 34, which is used as absorbent in both absorber 40 and 50. Alternatively, said diluter 60 can be located in-line 34 upstream the common acid cooler 35.

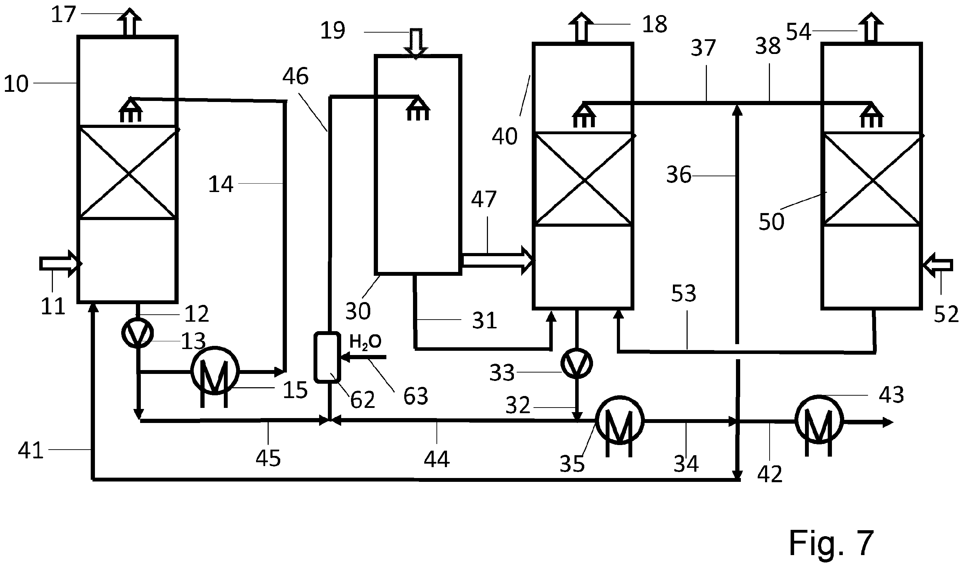

Figure 7 depicts another possibility for adding process water to regulate and control the acid concentration. A diluter 62 is positioned in the supplying conduit 46 for the acid used as absorbent in the pre-absorber 30.

### Reference numbers

- 1: pre-drying tower
- 2-4: conduit
- 5: pump
- 6: post-drying tower
- 7-9: conduit
- 10: drying tower
- 11, 12: conduit
- 13: pump
- 14: conduit
- 15: cooler
- 16 - 19: conduit
- 20: intermediate absorber
- 30: pre-absorber
- 31, 32: conduit
- 33: pump
- 34: cooler
- 35 - 39: conduit
- 40: post-absorber
- 41, 42: conduit
- 43: cooler
- 44 - 49: conduit
- 50: final absorber
- 51 - 59: conduit
- 60: diluter
- 61: conduit
- 62: diluter
- 63: conduit

## Claims

1. A process for producing sulfuric acid by catalytic oxidation of SO₂ to SO₃ and subsequent absorption of the SO₃ in concentrated sulfuric acid in an intermediate and a final absorber stage, wherein the intermediate absorber stage features a pre-absorber and a post-absorber, which are arranged such that the not-absorbed SO₃ leaving the pre-absorber is supplied to a post-absorber and such that the sulfuric acid leaving the post-absorber is split into two streams of which the first stream is recirculated back in the pre-absorber and the second stream is at least partly passed into the post-absorber, **characterized in that** the first stream is uncooled directly injected into the pre-absorber with a temperature between 80 and 200 °C, preferably between 100 and 150°C and the second stream passes a cooling and is at least partly fed into the post-absorber with a temperature between 60 and 90 °C.

2. A process according to claim 1, **characterized in that** the pre-absorber is designed as an empty tube or venturi and the post-absorber is designed as a packed-bed absorber.

3. A process according to claim 1 or 2, **characterized in that** the first stream features a flow rate between 20 and 80 %, preferably between 25 and 40 % of the sulfuric acid withdrawn from the post-absorber.

4. A process according any of the previous claims, **characterized in that** the first stream features a temperature difference to the entering SO₃ containing gas of less than 50 °C, preferably less than 30 °C.

5. A process according any of the previous claims, **characterized in that** the SO₂ containing feed gas to the plant has a concentration of more than 9,0 vol.-% prior to the conversion, preferably more than 11.5 vol.-%.

6. A process according to any of the previous claims, **characterized in that** air or SO₂ containing gas is dried in at least one drying tower by means of sulfuric acid and that the sulfuric acid discharged from the drying tower is supplied to the pre-absorber.

7. A process according to any of the previous claims, **characterized in that** the sulfuric acid from another source is admixed with the first stream and/or the second stream.

8. A process according any of the previous claims, **characterized in that** the second stream is further split in at least two streams downstream of the cooling.

9. A process according any of the previous claims, **characterized in that** process water is added to the sulfuric acid.

10. A process according any of the previous claims, **characterized in that** process water is added to the sulfuric acid second stream as discharged from the acid cooler, at a separate device

11. A process according any of the previous claims, **characterized in that** process water is added to the sulfuric acid first stream entering the pre-absorber, at a separate device.

12. A plant for the production of sulfuric acid for producing sulfuric acid by catalytic oxidation of SO₂ to SO₃ and subsequent absorption of the SO₃ in concentrated sulfuric acid in an intermediate and a final absorber stage, wherein the intermediate absorber stage features a pre-absorber (30) and a post-absorber (40), which are arranged such that the not-absorbed SO₃ leaving the pre-absorber (30) is supplied to a post-absorber (40), wherein a conduit (32) for withdrawing sulfuric acid from the post-absorber (40) is split into a conduit (46) recirculating sulfuric acid back into the pre-absorber (30) and a conduit (34) supplying sulfuric acid at least partly into the post-absorber, **characterized in that** a cooler (35) is foreseen only in any of the conduits (34,36) supplying sulfuric acid to the post-absorber (40).

13. A plant according to claim 12, **characterized in that** the cooler (35) is an air-cooled heat exchanger.

14. A plant according to claim 12 or 13, **characterized in that** the pre-absorber (30) is made of carbon steel with internal lining and/or the post-absorber (40) is made of stainless steel or carbon steel with an internal brick lining.

15. A plant according to any of the previous claims 12 to 14, **characterized in that** air or SO₂ containing gas is dried in a drying tower with sulfuric acid, wherein the drying tower features a pre-drying tower (1) and a post-drying tower (6), which are arranged such that air or SO₂ containing gas is supplied to the pre-drying tower (1), wherein a conduit (4) for acid from the post-drying tower (6) is split into a conduit (9) recirculating sulfuric acid back into the pre-drying tower (1) and a conduit (14) supplying sulfuric acid into the post-drying tower (6), and that a cooler (15) is only foreseen in the conduit (14) supplying sulfuric acid to the post-drying tower (6).

## Patentansprüche

1. Verfahren zur Herstellung von Schwefelsäure durch katalytische Oxidation von SO₂ zu SO₃ und anschließende Absorption des SO₃ in konzentrierter Schwefelsäure in einer Zwischen- und einer Endabsorberstufe, wobei die Zwischenabsorberstufe einen Vorabsorber und einen Nachabsorber aufweist, die so angeordnet sind, dass das den Vorabsorber verlassende nicht absorbierte SO₃ einem Nachabsorber zugeführt wird und wobei die den Nachabsorber verlassende Schwefelsäure in zwei Ströme aufgeteilt wird, von denen der erste Strom in den Vorabsorber zurückgeführt und der zweite Strom zumindest teilweise in den Nachabsorber geleitet wird, **dadurch gekennzeichnet, dass** der erste Strom ungekühlt direkt in den Vorabsorber mit einer Temperatur zwischen 80 und 200 °C, vorzugsweise zwischen 100 und 150 °C, eingespritzt wird und der zweite Strom eine Kühlung durchläuft und zumindest teilweise in den Nachabsorber mit einer Temperatur zwischen 60 und 90 °C geleitet wird.

2. Verfahren nach Anspruch 1, **dadurch gekennzeichnet, dass** der Vorabsorber als Leerrohr oder Venturi und der Nachabsorber als Festbettabsorber ausgebildet ist.

3. Verfahren nach Anspruch 1 oder 2, **dadurch gekennzeichnet, dass** der erste Strom eine Flussrate zwischen 20 und 80 %, vorzugsweise zwischen 25 und 40 %, bezogen auf die aus dem Nachabsorber abgezogenen Schwefelsäure aufweist.

4. Verfahren nach einem der vorhergehenden Ansprüche, **dadurch gekennzeichnet, dass** der erste Strom eine Temperaturdifferenz zum eintretenden SOshaltigen Gas von weniger als 50 °C, vorzugsweise weniger als 30 °C, aufweist.

5. Verfahren nach einem der vorhergehenden Ansprüche, **dadurch gekennzeichnet, dass** das SO₂-haltige Zufuhrgas der Anlage vor der Umwandlung eine Konzentration von mehr als 9,0 Vol.-%, vorzugsweise von mehr als 11,5 Vol.-%, aufweist.

6. Verfahren nach einem der vorhergehenden Ansprüche, **dadurch gekennzeichnet, dass** Luft oder SO₂-haltiges Gas in mindestens einem Trocknungsturm mittels Schwefelsäure getrocknet wird und dass die aus dem Trocknungsturm ausgetragene Schwefelsäure dem Vorabsorber zugeführt wird.

7. Verfahren nach einem der vorhergehenden Ansprüche, **dadurch gekennzeichnet, dass** Schwefelsäure aus einer anderen Quelle dem ersten Strom und/oder dem zweiten Strom zugemischt wird.

8. Verfahren nach einem der vorhergehenden Ansprüche, **dadurch gekennzeichnet, dass** der zweite Strom stromabwärts der Kühlung in mindestens zwei weitere Ströme aufgeteilt wird.

9. Verfahren nach einem der vorhergehenden Ansprüche, **dadurch gekennzeichnet, dass** der Schwefelsäure Prozesswasser zugesetzt wird.

10. Verfahren nach einem der vorhergehenden Ansprüche, **dadurch gekennzeichnet, dass** dem zweiten Schwefelsäurestrom, wie er aus dem Säurekühler abgezogen wird, in einer separaten Vorrichtung Prozesswasser zugesetzt wird.

11. Verfahren nach einem der vorhergehenden Ansprüche, **dadurch gekennzeichnet, dass** dem ersten Schwefelsäurestrom, der in den Vorabsorber eintritt, in einer separaten Vorrichtung Prozesswasser zugesetzt wird.

12. Anlage zur Herstellung von Schwefelsäure zur Herstellung von Schwefelsäure durch katalytische Oxidation von SO₂ zu SO₃ und anschließender Absorption des SO₃ in konzentrierter Schwefelsäure in einer Zwischen- und einer Endabsorberstufe, wobei die Zwischenabsorberstufe einen Vorabsorber (30) und einen Nachabsorber (40) aufweist, die so angeordnet sind, dass das den Vorabsorber (30) verlassende nicht absorbierte SO₃ einem Nachabsorber (40) zugeführt wird, wobei eine Leitung (32) zum Abziehen von Schwefelsäure aus dem Nachabsorber (40) in eine Leitung (46). die Schwefelsäure in den Vorabsorber (30) zurückführt, und in eine Leitung (34). die Schwefelsäure zumindest teilweise in den Nachabsorber zuführt, aufgespalten wird, **dadurch gekennzeichnet, dass** ein Kühler (35) nur in einer der Leitungen (34, 36) vorgesehen ist, die Schwefelsäure in den Nachabsorber (40) führen.

13. Anlage nach Anspruch 12, **dadurch gekennzeichnet, dass** der Kühler (35) ein luftgekühlter Wärmetauscher ist.

14. Anlage nach Anspruch 12 oder 13, **dadurch gekennzeichnet, dass** der Vorabsorber (30) aus Kohlenstoffstahl mit Innenauskleidung gefertigt ist und/oder der Nachabsorber (40) aus rostfreiem Stahl oder Kohlenstoffstahl mit einer Innenausmauerung gefertigt ist.

15. Anlage nach einem der vorhergehenden Ansprüche 12 bis 14, **dadurch gekennzeichnet, dass** Luft oder SO₂-haltiges Gas in einem Trocknungsturm mit Schwefelsäure getrocknet wird, wobei der Trocknungsturm einen Vortrocknungsturm (1) und einen Nachtrocknungsturm (6) aufweist, die so angeordnet sind, dass dem Vortrocknungsturm (1) Luft oder SO₂-haltiges Gas zugeführt wird, wobei eine Leitung (4) für Säure aus dem Nachtrocknungsturm (6) aufgespalten ist in eine Leitung (9), die Schwefelsäure in den Vortrocknungsturm (1) zurückführt, und eine Leitung (14), die Schwefelsäure in den Nachtrocknungsturm (6) liefert, und dass ein Kühler (15) nur in der Leitung (14) vorgesehen ist, die Schwefelsäure in den Nachtrocknungsturm (6) liefert.

## Revendications

1. Procédé de production d'acide sulfurique par oxydation catalytique de SO₂ en SO₃ et par absorption ultérieure du SO₃ dans de l'acide sulfurique concentré dans un absorbeur intermédiaire et un absorbeur final, dans lequel l'étage d'absorbeur intermédiaire comprend un pré-absorbeur et un post-absorbeur qui sont disposés de telle sorte que le SO₃ non absorbé quittant le pré-absorbeur est acheminé vers un post-absorbeur et que l'acide sulfurique quittant le post-absorbeur est divisé en deux flux dont le premier est recirculé dans le pré-absorbeur et le second passe au moins en partie dans le post-absorbeur, **caractérisé en ce que** le premier flux est directement injecté non refroidi dans le pré-absorbeur à une température comprise entre 80 et 200 °C, de préférence comprise entre 100 et 150 °C, et que le second flux passe par un refroidissement et est au moins partiellement introduit dans le post-absorbeur à une température comprise entre 60 et 90 °C.

2. Procédé selon la revendication 1, **caractérisé en ce que** le pré-absorbeur est conçu comme un tube vide ou une venturi et le post-absorbeur est conçu comme un absorbeur à lit compact.

3. Procédé selon la revendication 1 ou la revendication 2, **caractérisé en ce que** le premier flux présente un débit compris entre 20 et 80 %, de préférence compris entre 25 et 40 % de l'acide sulfurique soutiré du post-absorbeur.

4. Procédé selon quelconque des revendications précédentes, **caractérisé en ce que** le premier flux présente une différence de température avec le gaz entrant contenant du SO₃ inférieure à 50 °C, de préférence inférieure à 30 °C.

5. Procédé selon quelconque des revendications précédentes, **caractérisé en ce que** le gaz d'alimentation de l'usine contenant du SO₂ a une concentration supérieure à 9,0 % en volume avant la conversion, de préférence supérieure à 11,5 % en volume.

6. Procédé selon quelconque des revendications précédentes, **caractérisé en ce que** l'air ou le gaz contenant du SO₂ est séché dans au moins une tour de séchage au moyen d'acide sulfurique et **en ce que** l'acide sulfurique déchargé de la tour de séchage est fourni au pré-absorbeur.

7. Procédé selon l'une quelconque des revendications précédentes, **caractérisé en ce que** l'acide sulfurique provenant d'une autre source est mélangé au premier flux et/ou au second flux.

8. Procédé selon l'une quelconque des revendications précédentes, **caractérisé en ce que** le second flux est en outre divisé en au moins deux flux en aval du refroidissement.

9. Procédé selon l'une quelconque des revendications précédentes, **caractérisé en ce que** de l'eau de traitement est ajoutée à l'acide sulfurique.

10. Procédé selon l'une quelconque des revendications précédentes, **caractérisé en ce que** l'eau de traitement est ajoutée au second flux d'acide sulfurique à la sortie du refroidisseur d'acide, dans un dispositif séparé.

11. Procédé selon quelconque des revendications précédentes, **caractérisé en ce que** l'eau de traitement est ajoutée au premier flux d'acide sulfurique entrant dans le pré-absorbeur, au niveau d'un dispositif séparé.

12. Usine de production d'acide sulfurique pour la production d'acide sulfurique par oxydation catalytique de SO₂ en SO₃ et par absorption ultérieure du SO₃ dans de l'acide sulfurique concentré dans un étage d'absorbeur intermédiaire et un étage d'absorbeur final, dans laquelle l'étage d'absorbeur intermédiaire comprend un pré-absorbeur (30) et un post-absorbeur (40), qui sont disposés de telle sorte que le SO₃ non absorbé quittant le pré-absorbeur (30) est fourni à un post-absorbeur (40), dans laquelle un conduit (32) de prélèvement d'acide sulfurique dans le post-absorbeur (40) est divisé en un conduit (46) de recirculation de l'acide sulfurique dans le pré-absorbeur (30) et un conduit (34) d'alimentation en acide sulfurique au moins partiellement dans le post-absorbeur, **caractérisé en ce qu'**un refroidisseur (35) est prévu uniquement dans l'un quelconque des conduits (34, 36) d'alimentation en acide sulfurique dans le post-absorbeur (40).

13. Usine selon la revendication 12, **caractérisée en ce que** le refroidisseur (35) est un échangeur de chaleur refroidi à l'air.

14. Usine selon la revendication 12 ou la revendication 13, **caractérisée en ce que** le pré-absorbeur (30) est en acier au carbone avec un revêtement interne et/ou le post-absorbeur (40) est en acier inoxydable ou en acier au carbone avec un revêtement interne en briques.

15. Usine selon l'une quelconque des revendications précédentes 12 à 14, **caractérisée en ce que** l'air ou le gaz contenant du SO₂ est séché dans une tour de séchage avec de l'acide sulfurique, dans laquelle la tour de séchage comporte une tour de pré-séchage (1) et une tour de post-séchage (6), qui sont disposées de manière à ce que l'air ou le gaz contenant du SO₂ soit fourni à la tour de pré-séchage (1), dans laquelle un conduit (4) pour l'acide provenant de la tour de post-séchage (6) est divisé en un conduit (9) faisant recirculer l'acide sulfurique dans la tour de pré-séchage (1) et un conduit (14) fournissant de l'acide sulfurique dans la tour de post-séchage (6), et qu'un refroidisseur (15) n'est prévu que dans le conduit (14) fournissant de l'acide sulfurique à la tour de post-séchage (6).
